# EUROPEAN PATENT APPLICATION

(11) **EP 4 822 524 A1**
(43) Date of publication of application: **14.10.2026**
(21) Application number: 26170393.8
(22) Date of filing: 02.04.2026
(51) Int. Cl.: G06F 8/65, G06F 3/12, H04N 1/00

(54) **IMAGE FORMING APPARATUS WITH ICON FOR NOTIFYING FIRMWARE UPDATE AVAILABILITY IN A REMOTE SERVER**

(30) Priority: 07.04.2025 JP 2025062951
(71) Applicant: Sharp Kabushiki Kaisha, Sakai City, Osaka 590-8522 (JP)
(72) Inventor: CHIBA, Kunihisa, Osaka, 590-8522 (JP)
(74) Representative: Müller Hoffmann & Partner

(57) **Abstract**

An image forming apparatus includes a display that displays a first screen and a second screen to which a transition is able to be made from the first screen, a communicator that communicates with a server apparatus, an update manager that executes update processing to update a firmware program, and a display manager that does not display an update icon related to the update processing on the first screen in a first state where the server apparatus has not notified the update manager that an update program for updating the firmware program is available, and that displays the update icon on at least one of the first screen and the second screen in a second state where the server apparatus has notified the update manager that the update program is available.

## Description

### BACKGROUND

### 1. Field

The disclosure relates to an image forming apparatus.

### 2. Description of the Related Art

The related art discloses an image forming apparatus that displays an application list creation screen on which icons corresponding to standard applications or extended applications are displayed, creates an operation screen for a standard or extended application specified from the application list creation screen, and transmits, to a display, a request to display the created operation screen. The image forming apparatus disclosed in the related art displays different icons for different setting information, even for the same standard application, based on icon arrangement information.

### SUMMARY

In some image forming apparatuses, an icon related to a firmware program update is displayed on a home screen. However, when an icon related to a firmware program update is displayed on a home screen when updating a firmware program is not necessary, there is a concern that a user will misunderstand that updating the firmware program is necessary. When using the technology disclosed in the related art, an icon to be displayed is determined for each piece of setting information, and thus there is a concern that an unnecessary icon will be displayed depending on the state of the image forming apparatus.

Consequently, an object of one aspect of the disclosure is to provide an image forming apparatus that can prevent a user from misunderstanding that a firmware program needs to be updated when the firmware program does not need to be updated.

An image forming apparatus according to one embodiment of the disclosure includes a display that displays a first screen and a second screen to which a transition is able to be made from the first screen, a communicator that communicates with a server apparatus, an update manager that executes update processing to update a firmware program, and a display manager that does not display an update icon related to the update processing on the first screen in a first state where the server apparatus has not notified the update manager that an update program for updating the firmware program is available, and that displays the update icon on at least one of the first screen and the second screen in a second state where the server apparatus has notified the update manager that the update program is available.

### BRIEF DESCRIPTION OF THE DRAWINGS

FIG. 1 is a block diagram illustrating an example of the configuration of an information processing system.
FIG. 2 is a block diagram illustrating an example of the configuration of an image forming apparatus according to a first embodiment.
FIG. 3 is a block diagram illustrating an example of the configuration of a server apparatus.
FIG. 4 is a sequence diagram illustrating an example of the operation of the information processing system according to the first embodiment.
FIG. 5 is a sequence diagram illustrating another example of the operation of the information processing system according to the first embodiment.
FIG. 6 is a diagram illustrating an example of a first screen that does not include an update icon.
FIG. 7 is a diagram illustrating an example of a first screen that includes an update icon.
FIG. 8 is a diagram illustrating an example of a second screen.
FIG. 9 is a diagram illustrating an example of an update selection screen.
FIG. 10 is a diagram illustrating an example of an authentication screen.
FIG. 11 is a block diagram illustrating an example of the configuration of an image forming apparatus according to a second embodiment.
FIG. 12 is a sequence diagram illustrating an example of the operation of an information processing system when an automatic update is executed.
FIG. 13 is a sequence diagram illustrating an example of the operation of the information processing system when it is indicated that a user does not have predetermined authority.
FIG. 14 is a sequence diagram illustrating an example of the operation of an information processing system according to a third embodiment.

### DETAILED DESCRIPTION OF THE DISCLOSURE

### First Embodiment

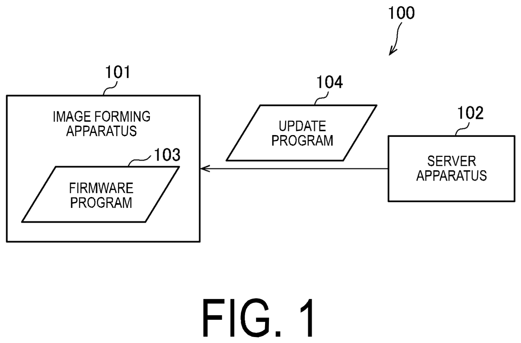

A first embodiment will be described with reference to FIGS. 1 to 9. In the drawings, the same or equivalent elements are denoted by the same reference signs, and repeated descriptions will be omitted.

FIG. 1 is a block diagram illustrating an example of the configuration of an information processing system 100. The information processing system 100 includes an image forming apparatus 101 and a server apparatus 102.

The image forming apparatus 101 is a multifunction machine equipped with functions such as copying, faxing, and scanning. A firmware program 103 is installed in the image forming apparatus 101. The firmware program 103 controls hardware installed in the image forming apparatus 101.

The server apparatus 102 is an information processing apparatus that can communicate with the image forming apparatus 101. The server apparatus 102 is connected to the image forming apparatus 101 via a wired or wireless network. For example, the network between the image forming apparatus 101 and the server apparatus 102 may be the Internet or a local area network (LAN). The server apparatus 102 transmits an update program 104 for operating the image forming apparatus 101 to the image forming apparatus 101 via the network. The update program 104 is a program for updating the firmware program 103.

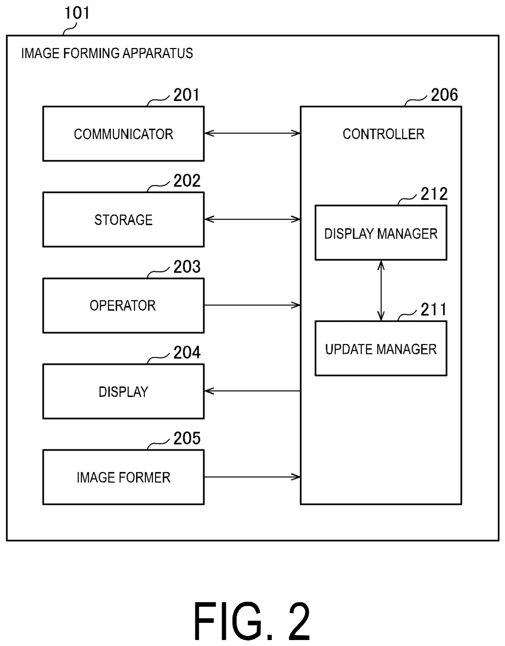

FIG. 2 is a block diagram illustrating an example of the configuration of the image forming apparatus 101 according to the present embodiment. The image forming apparatus 101 includes a communicator 201, a storage 202, an operator 203, a display 204, an image former 205, and a controller 206.

The communicator 201 is an interface for connecting to and communicating with the network. Specifically, the communicator 201 connects to the network and communicates with the server apparatus 102.

The storage 202 is a storage medium that can store various types of data, programs, and the like. The storage 202 stores the firmware program 103. For example, the storage 202 is configured with a hard disk drive (HDD), a solid state drive (SSD), a semiconductor memory, or the like.

The operator 203 receives an operation by a user. For example, the operator 203 is configured with a touch panel or the like. The display 204 displays information to be presented to a user. For example, the display 204 is configured with a liquid crystal panel, an organic Electro-Luminescence (EL) panel, or the like. A touch panel display in which the operator 203 and the display 204 are integrated may be configured.

The image former 205 acquires an image and forms the acquired image on a sheet.

The controller 206 controls the entire image forming apparatus 101. The controller 206 implements various functions by reading and executing various programs stored in the storage 202. The controller 206 may be implemented by one or a plurality of control apparatuses/arithmetic apparatuses (such as a central processing unit (CPU), a system on a chip (SoC)), one or more random access memories (RAMs), one or more read only memories (ROMs), various interface circuits, or the like. Some or all of the processors included in the controller 206 may be configured with an electronic circuit.

The controller 206 includes an update manager 211 and a display manager 212. The controller 206 implements the update manager 211 and the display manager 212 by executing processing in accordance with the programs and data stored in the storage 202.

The update manager 211 executes update processing for updating the firmware program 103.

The display manager 212 controls images and the like displayed on the display 204.

Specifically, after the image forming apparatus 101 is started up, the display manager 212 displays a first screen on the display 204. The first screen is a screen that is displayed on the display 204 after the image forming apparatus 101 is started up. For example, the first screen includes an icon related to a copy function, an icon related to a fax function, an icon related to a scanning function, an icon indicating the status of the image forming apparatus 101, and the like. Furthermore, when the operator 203 receives an operation of displaying a second screen while the first screen is being displayed on the display 204, the display manager 212 displays the second screen, which is a transition from the first screen, on the display 204.

In a state (first state) in which the server apparatus 102 has not notified the update manager 211 that the update program 104 is available, the display manager 212 does not display, on the first screen, an update icon related to update processing. On the other hand, in a state (second state) in which the server apparatus 102 has notified the update manager 211 that the update program 104 is available, the display manager 212 displays the update icon on at least one of the first screen and the second screen. That is, in a state where the server apparatus 102 has notified the update manager 211 that an update program 104 is available, the display manager 212 displays the update icon so that it can be displayed on both the first screen and the second screen.

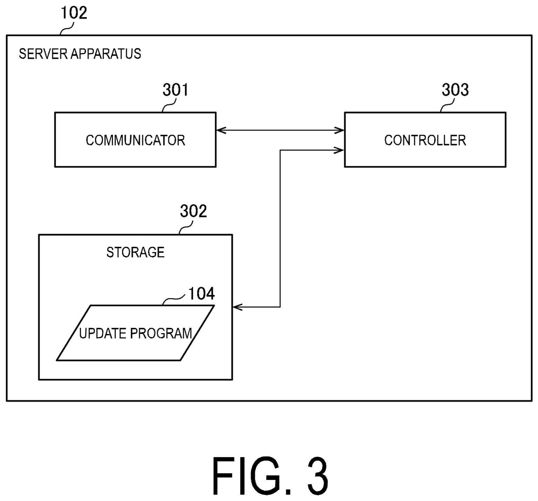

FIG. 3 is a block diagram illustrating an example of the configuration of the server apparatus 102.

The server apparatus 102 includes a communicator 301, a storage 302, and a controller 303.

The communicator 301 is an interface for connection to the network.

The storage 302 is a storage medium that can store various types of data, programs, and the like. For example, the storage 302 stores the update program 104. The storage 302 is configured with an HDD, an SSD, a semiconductor memory, or the like.

The controller 303 controls the entire server apparatus 102. The controller 303 implements various functions by reading and executing various programs stored in the storage 302. The controller 303 may be implemented by one or a plurality of control apparatuses/arithmetic apparatuses (SoC), one or more RAMs, one or more ROMs, various interface circuits, or the like. Some or all of the processors included in the controller 303 may be configured with an electronic circuit.

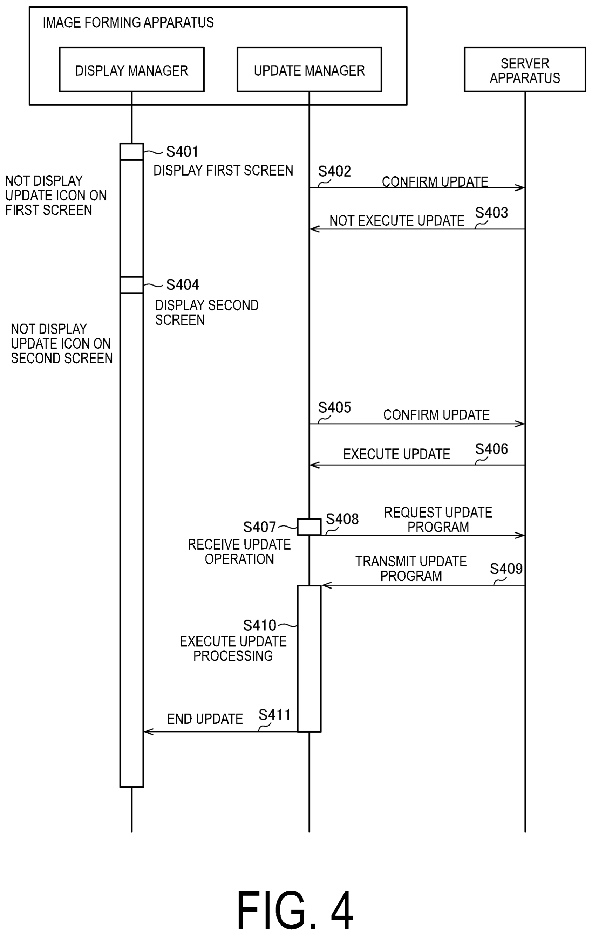

FIG. 4 is a sequence diagram illustrating an example of the operation of the information processing system 100. In the following description, it is assumed that the update manager 211 executes update confirmation processing at predetermined time intervals. The update confirmation processing is processing of inquiring of the server apparatus 102 about whether the update program 104 is available.

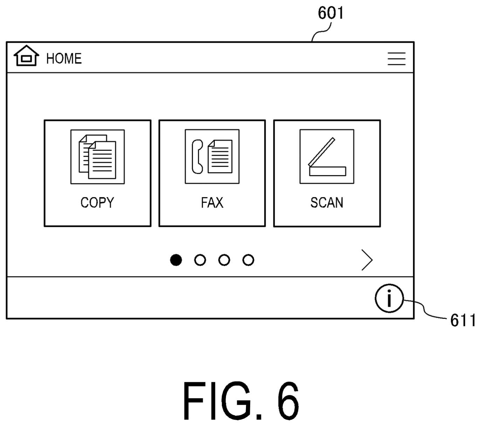

When the image forming apparatus 101 is started up, the display manager 212 displays a first screen 601 (see FIG. 6) on the display 204 in step S401. Here, the display manager 212 does not display an update icon 701 on the first screen 601. Thereby, when the server apparatus 102 has not notified the update manager 211 that the update program 104 is available, the image forming apparatus 101 can prevent the display on the display 204 from becoming complicated and prevent a user from misunderstanding that the firmware program 103 needs to be updated.

While the display manager 212 is displaying the first screen 601 on the display 204, the update manager 211 executes update confirmation processing in step S402.

For example, it is assumed that a first version number is assigned to the firmware program 103 installed on the image forming apparatus 101 that is the source of the inquiry. For example, it is assumed that a second version number is assigned to the update program 104 stored in the storage 302. When the first version number and the second version number are the same, the controller 303 determines not to give an instruction to execute update processing and responds to the image forming apparatus 101 that an instruction to execute update processing is not given. On the other hand, when the first version number and the second version number are different and the firmware program 103 is an older version than the update program 104, the controller 303 determines to give an instruction to execute update processing and responds to the image forming apparatus 101 to instruct execution of the update processing.

For example, when the processing of step S402 to step S403 is executed, it is assumed that the display manager 212 displays the first screen 601 on the display 204. In this case, the display manager 212 maintains a state where the update icon is not displayed on the first screen 601. That is, while the first screen 601 is displayed on the display 204, the image forming apparatus 101 can cause the user to operate the image forming apparatus 101 without allowing the user to visually recognize the update icon.

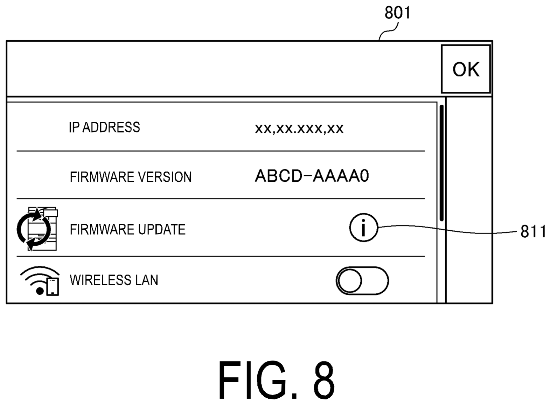

It is assumed that, while the display manager 212 is displaying the first screen 601 on the display 204, the operator 203 has received an operation of displaying the second screen 801. In this case, in step S404, the display manager 212 displays the second screen 801 (see FIG. 8) on the display 204. Furthermore, the display manager 212 displays an update icon 811 (see FIG. 8) on the second screen 801. That is, the display manager 212 displays the update icon 811 on the second screen 801 in a state where the server apparatus 102 has not notified the update manager 211 that the update program 104 is available.

While the display manager 212 is displaying the second screen 801 on the display 204, the update manager 211 executes update confirmation processing in step S405. Then, it is assumed that the controller 303 determines to give an instruction to execute update processing. In this case, in step S406, the controller 303 responds to the image forming apparatus 101 to give an instruction to execute update processing.

When the display manager 212 is displaying the second screen 801 on the display 204 and the operator 203 has received an operation of selecting the update icon 811, the display manager 212 displays an update selection screen 901 (see FIG. 8) on the display 204.

When the update manager 211 determines that the operator 203 has received an update operation of executing update processing to update the firmware program 103 (step S407), the update manager 211 executes processing of requesting the update program 104 from the server apparatus 102 in step S408. When the communicator 301 has received information indicating a request for the update program 104 from the image forming apparatus 101, the controller 303 transmits the update program 104 to the image forming apparatus 101 in step S409.

In step S410, the update manager 211 executes processing of updating the firmware program 103 using the update program 104 transmitted from the server apparatus 102. Thus, when the second screen 801 is displayed on the display 204 and the server apparatus 102 has notified the update manager 211 that the update program 104 is available, the image forming apparatus 101 updates the firmware program 103 based on a user operation.

In step S411, when the execution of the update processing ends, the update manager 211 notifies the display manager 212 that the updating of the firmware program 103 has ended. While the second screen 801 is being displayed on the display 204, the display manager 212 maintains the update icon 811 displayed on the second screen after the execution of the update processing has ended.

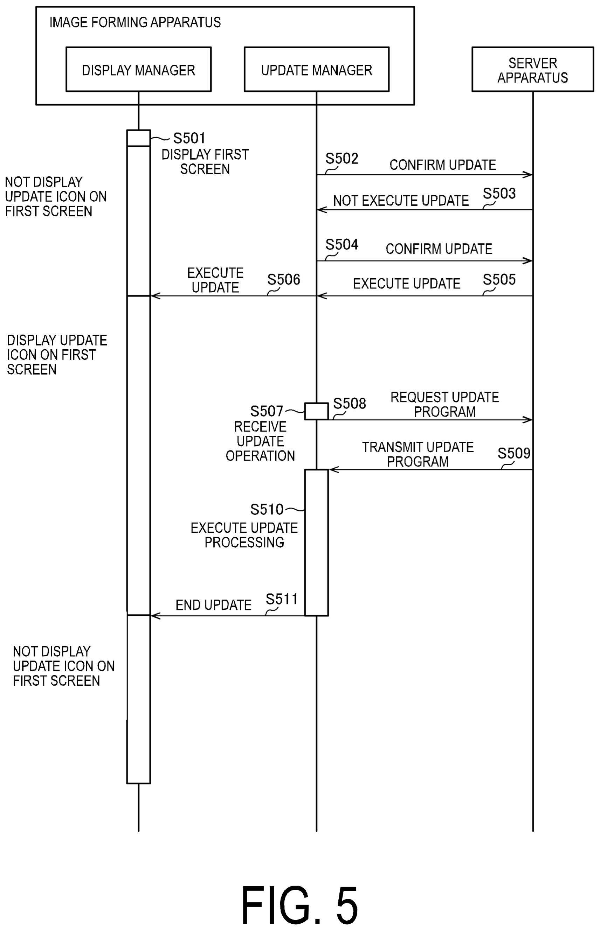

FIG. 5 is a sequence diagram illustrating another example of the operation of the information processing system 100. The processing of step S501 to step S503 is similar to the processing of step S401 to step S403 illustrated in FIG. 4, and thus a detailed description thereof will be omitted.

While the display manager 212 is displaying the first screen 601 on the display 204, the update manager 211 executes update confirmation processing in step S504. Then, the controller 303 instructs the image forming apparatus 101 to execute the update processing. In this case, in step S505, the controller 303 responds to the image forming apparatus 101 to give an instruction to the execution of the update processing.

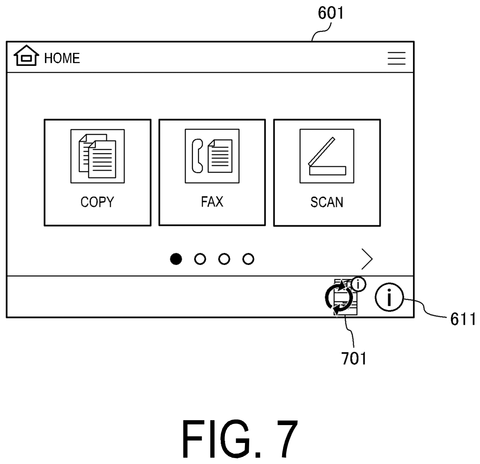

In step S506, the update manager 211 notifies the display manager 212 that the server apparatus 102 has notified the update manager 211 that the update program 104 is available. In this case, the display manager 212 displays an update icon 701 (see FIG. 7) on the first screen 601. For example, when the first screen 601 is a home screen, the home screen is a screen that the user views most often. For this reason, when the server apparatus 102 has notified the update manager 211 that the update program 104 is available, the image forming apparatus 101 can make it easier for the user to recognize that update processing needs to be executed by displaying the update icon 701 (see FIG. 7) on the first screen 601.

When the display manager 212 is displaying the update icon 701 on the first screen 601 and the operator 203 has received an operation of selecting the update icon 701, the display manager 212 displays an update selection screen 901 on the display 204.

When it is determined that the operator 203 has received the update operation (step S507), the update manager 211 executes processing of requesting the update program 104 from the server apparatus 102 in step S508. In step S509, the controller 303 transmits the update program 104 stored in the storage 302 to the image forming apparatus 101.

In step S510, the update manager 211 executes processing of updating the firmware program 103 using the update program 104 transmitted from the server apparatus 102. Thus, when the first screen 601 is displayed on the display 204 and the server apparatus 102 has notified the update manager 211 that the update program 104 is available, the image forming apparatus 101 updates the firmware program 103 based on a user operation. The processing of step S508 to step S510 is similar to the processing of step S408 to step S410 illustrated in FIG. 4, and thus a detailed description thereof will be omitted.

In step S511, when the processing of updating the firmware program 103 has ended, the update manager 211 notifies the display manager 212 that the updating of the firmware program 103 has ended. While the first screen 601 is being displayed on the display 204, the display manager 212 returns the state to a state where the update icon 701 is not displayed on the first screen 601 as shown in FIG. 6, after the execution of the processing of updating the firmware program 103 has ended.

FIG. 6 is a diagram illustrating an example of the first screen 601 that does not include the update icon 701. The first screen 601 is a home screen. For example, after the image forming apparatus 101 is started up, the first screen 601 is displayed on the display 204 without any user operation. The first screen 601 includes a second screen display button 611. When the operator 203 has received an operation of selecting the second screen display button 611, the display manager 212 displays the second screen 801 on the display 204.

FIG. 7 is a diagram illustrating an example of the first screen 601 including the update icon 701. When the operator 203 has received an operation of selecting the update icon 701, the display manager 212 displays the update selection screen 901 on the display 204. That is, when the display manager 212 displays the update icon 701 on the first screen 601 in a state where the server apparatus 102 has notified the update manager 211 that the update program 104 is available, the update manager 211 can transition from a state where the first screen 601 is displayed on the display 204 to a state where the user selects whether to update the firmware program 103.

FIG. 8 is a diagram illustrating an example of the second screen 801. The second screen 801 includes an update icon 811. When the operator 203 has received an operation of selecting the update icon 811, the display manager 212 displays an update selection screen 901 on the display 204. Thereby, even when the server apparatus 102 has not notified the update manager 211 that the update program 104 is available, the image forming apparatus 101 can intentionally cause the user to confirm whether an update is necessary by displaying the update icon 811 on the second screen 801.

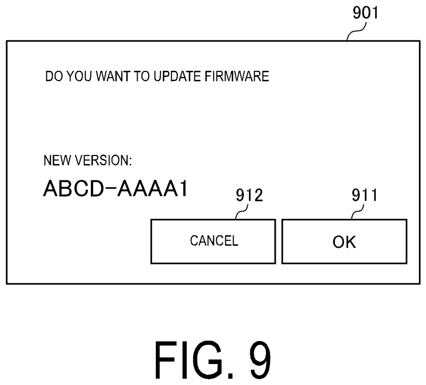

FIG. 9 is a diagram illustrating an example of the update selection screen 901. The update selection screen 901 includes an OK button 911 and a cancel button 912. Furthermore, for example, the update selection screen 901 shows a second version number "ABCD-AAAA1".

When the user does not apply, to the image forming apparatus 101, the update program 104 assigned the second version number shown on the update selection screen 901, the user selects the cancel button 912. When the operator 203 has received an operation of selecting the cancel button 912, the display manager 212 sets the update selection screen 901 to be in a non-display state. That is, the display manager 212 displays the second screen 801 on the display 204.

On the other hand, when the user applies, to the image forming apparatus 101, the update program 104 assigned the second version number shown on the update selection screen 901, the user selects the OK button 911. When the operator 203 has received an operation of selecting the OK button 911, the display manager 212 displays an authentication screen 1001 for authenticating a user with predetermined authority on the display 204.

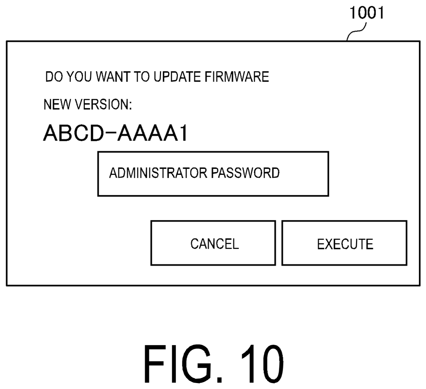

FIG. 10 is a diagram illustrating an example of the authentication screen 1001. The authentication screen includes a password input field for a user with predetermined authority. When the update manager 211 has authenticated a password that is input to the authentication screen, the update manager 211 determines that the operator 203 has received an update operation (step S407 illustrated in FIG. 4 or step S507 illustrated in FIG. 5).

When the update icon 701 is displayed on the first screen 601 in a state where the server apparatus 102 has not notified the update manager 211 that the update program 104 is available, there is a concern that the user will misunderstand that the firmware program 103 needs to be updated. However, the display manager 212 according to the present embodiment does not display the update icon 701 on the first screen 601 in a state where the server apparatus 102 has not notified the update manager 211 that the update program 104 is available. Thereby, when the firmware program 103 does not need to be updated, the image forming apparatus 101 according to the present embodiment can prevent the user from misunderstanding that the firmware program 103 needs to be updated.

### Modification Example

As a modification example of the image forming apparatus 101 according to the present embodiment, the image forming apparatus 101 may display an update icon on the first screen 601 or the second screen 801. Specifically, when the display manager 212 according to the present modification example displays the update icon 701 on the first screen 601, it does not display the update icon 701 on the second screen 801. On the other hand, when the display manager 212 does not display the update icon 701 on the first screen 601, the display manager 212 displays the update icon 701 on the second screen 801.

When the update icon 701 is displayed on the first screen 601 and the update icon 811 is displayed on the second screen 801, there is a concern that the user will misunderstand that the update icon 701 and the update icon 811 have different meanings, which may confuse the user. However, the image forming apparatus 101 can prevent the user from being confused by displaying the update icon on either the first screen 601 or the second screen 801.

### Second Embodiment

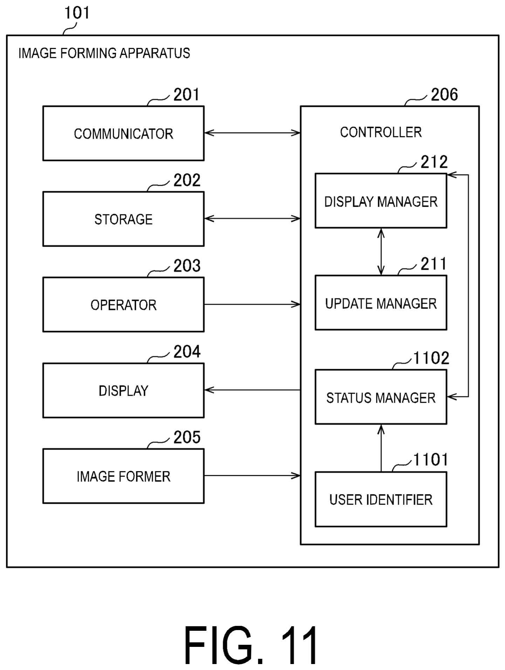

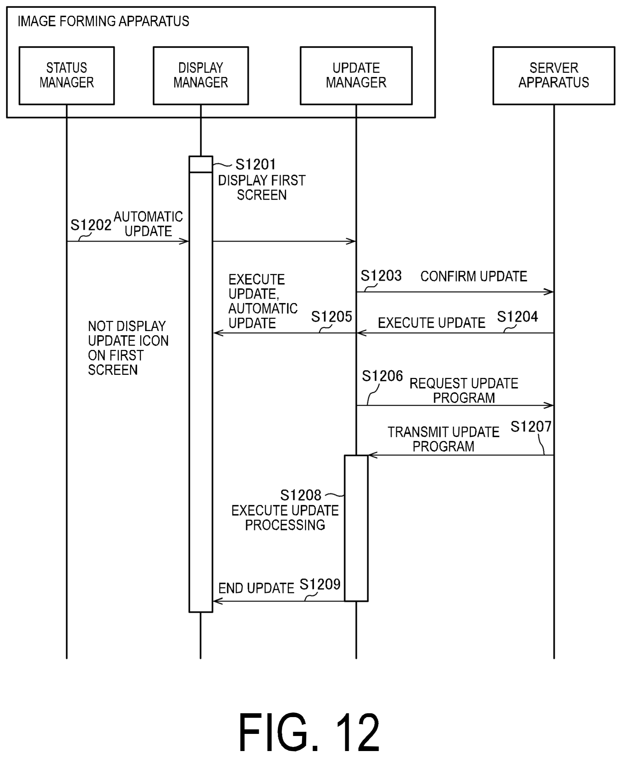

A second embodiment will be described with reference to FIGS. 11 and 12. In the drawings, the same or equivalent elements are denoted by the same reference signs, and redundant descriptions are omitted. Configurations and processing having substantially the same functions as those in the other embodiments will be referred to by using the same reference characters, descriptions thereof will be omitted, and points differing from the other embodiments will be described.

FIG. 11 is a block diagram illustrating an example of the configuration of the image forming apparatus 101 according to the present embodiment. A difference between the image forming apparatus 101 illustrated in FIG. 11 and the image forming apparatus 101 illustrated in FIG. 2 is that the image forming apparatus 101 illustrated in FIG. 11 includes a user identifier 1101 and a status manager 1102.

The user identifier 1101 identifies a user who has logged in to the image forming apparatus 101.

The status manager 1102 manages whether an automatic update mode for performing automatic updates is enabled. Specifically, the status manager 1102 manages automatic update information. The automatic update information indicates whether the automatic update mode is enabled. The status manager 1102 notifies the update manager 211 of the automatic update information in response to a request from the update manager 211.

When the automatic update mode is enabled, the update manager 211 according to the present embodiment executes update processing in a state where the server apparatus 102 has notified the update manager 211 that the update program 104 is available.

The display manager 212 in the present embodiment does not display the update icon 701 on the first screen 601 when the automatic update mode is enabled in a state where the server apparatus 102 has notified the update manager 211 that the update program 104 is available. On the other hand, the display manager 212 displays the update icon 701 on the first screen 601 when the automatic update mode is not enabled in a state where the server apparatus 102 has notified the update manager 211 that the update program 104 is available.

Furthermore, when the user identifier 1101 has identified the user as not having predetermined authority, the display manager 212 does not display the update icon 701 on the first screen 601 and does not display the update icon 811 on the second screen 801 in a state where the server apparatus 102 has not notified the update manager 211 that the update program 104 is available, and in a state where the server apparatus 102 has notified the update manager 211 that the update program 104 is available. On the other hand, when the user identifier 1101 has identified the user as having predetermined authority, the display manager 212 displays the update icon 701 on the first screen 601 in a state where the server apparatus 102 has notified the update manager 211 that the update program 104 is available.

The operation of information processing system 100 when automatic update mode is enabled will be described with reference to FIG. 12. FIG. 12 is a sequence diagram illustrating an example of the operation of the information processing system 100 when the automatic update mode is enabled. In this example, it is assumed that automatic update information indicates that the automatic update mode is enabled.

When the image forming apparatus 101 is started up, the display manager 212 displays the first screen 601 on the display 204 in step S1201. Here, the display manager 212 does not display the update icon 701 on the first screen 601.

In step S1202, the status manager 1102 notifies the update manager 211 of the automatic update information. In this example, it is assumed that the automatic update information indicates that the automatic update mode is enabled.

In step S1203, the update manager 211 executes update confirmation processing. Then, it is assumed that the controller 303 determines that update processing needs to be executed. In this case, it is assumed that the controller 303 has responded to the image forming apparatus 101 in step S1204 to give an instruction to execute the update processing. In this case, in step S1205, the update manager 211 notifies the display manager 212 that the server apparatus 102 has notified the update manager 211 that the update program 104 is available, and that the automatic update mode is enabled. In this case, the display manager 212 does not display the update icon 701 on the first screen 601.

In step S1206, the update manager 211 executes processing of requesting the update program 104 from the server apparatus 102. That is, when the automatic update information indicates that the automatic update mode is enabled in a state where the display manager 212 is displaying the first screen 601 on the display 204, the update manager 211 executes the processing of requesting the update program 104 from the server apparatus 102 without receiving any user operation.

In step S1207, the controller 303 transmits the update program 104 stored in the storage 302 to the image forming apparatus 101. In step S1208, the update manager 211 executes processing of updating the firmware program 103 using the update program 104 transmitted from the server apparatus 102. Thus, in a state where the first screen 601 is displayed on the display 204 and the server apparatus 102 has notified the update manager 211 that the update program 104 is available, the image forming apparatus 101 updates the firmware program 103 without any user operation.

In step S1209, when the processing of updating the firmware program 103 has ended, the update manager 211 notifies the display manager 212 that the updating of the firmware program 103 has ended.

Since the automatic update information notified to the display manager 212 in step S1202 indicates that the automatic update mode is enabled, the display manager 212 does not display the update icon 701 on the first screen 601, and the processing of step S1203 to step S1209 is executed.

In a state where the server apparatus 102 has notified the update manager 211 that the update program 104 is available and automatic update mode is enabled, the update manager 211 executes the update processing. For example, when the update icon 701 is displayed on the first screen 601 when an automatic update is executed, there is a concern that the user will misunderstand that it is necessary to perform an operation in order to update the firmware program 103. However, when an automatic update is executed for the firmware program 103, the display manager 212 does not display the update icon 701 on the first screen 601. When an automatic update is executed, the image forming apparatus 101 updates the firmware program 103 without causing the user to misunderstand that the firmware program 103 will be updated in a state where the server apparatus 102 has notified the update manager 211 that the update program 104 is available.

As described above, when the image forming apparatus 101 according to the present embodiment executes an automatic update in a state where the server apparatus 102 has notified the update manager 211 that the update program 104 is available, the image forming apparatus 101 can prevent the user from misunderstanding that it is necessary to perform an operation in order to update the firmware program 103.

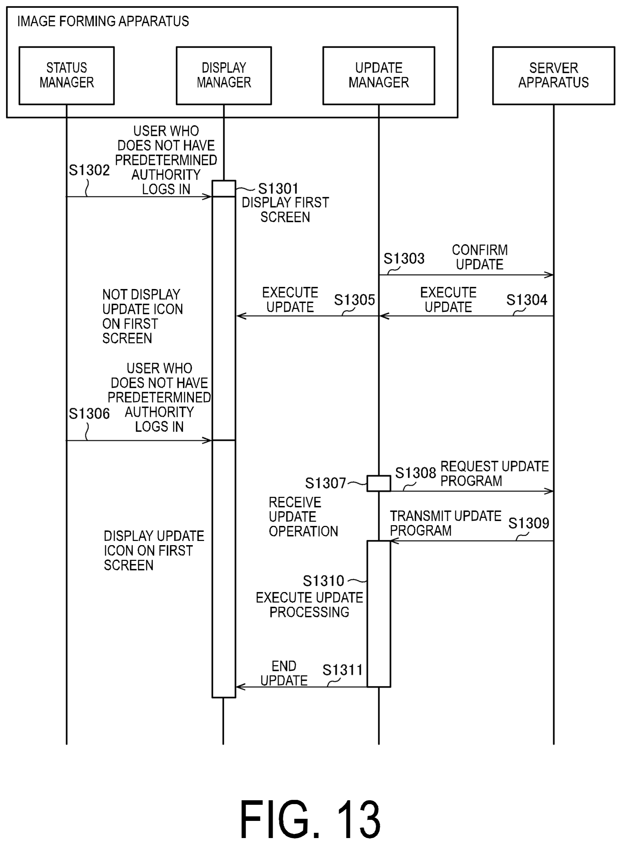

The operation of the information processing system 100 when it is indicated that a user does not have predetermined authority will be described with reference to FIG. 13. FIG. 13 is a sequence diagram illustrating an example of the operation of the information processing system 100 when it is indicated that a user does not have predetermined authority.

When the image forming apparatus 101 is started up, the display manager 212 displays the first screen 601 on the display 204 in step S1301. Here, the display manager 212 does not display the update icon 701 on the first screen 601.

In step S1302, the status manager 1102 notifies the update manager 211 of user information. In this example, the user information indicates that the user does not have predetermined authority. When the user information indicates that the user does not have predetermined authority, the display manager 212 does not display the update icon 701 on the first screen 601.

In step S1303, the update manager 211 executes update confirmation processing. Then, it is assumed that the controller 303 determines to give an instruction to execute update processing. Then, in step S1304, it is assumed that the controller 303 responds to the image forming apparatus 101 that an instruction to execute update processing is given. In this case, in step S1305, the update manager 211 notifies the display manager 212 that the server apparatus 102 has notified the update manager 211 that the update program 104 is available.

Since the user information notified to the display manager 212 in step S1302 indicates that the user does not have predetermined authority, the display manager 212 does not display the update icon 701 on the first screen 601, and the processing of step S1303 to step S1305 is executed. When the user information indicates that the user does not have predetermined authority, the display manager 212 does not display the update icon 701 on the first screen 601 in a state where the server apparatus 102 has notified the update manager 211 that the update program 104 is available. For this reason, when the user does not have predetermined authority, the image forming apparatus 101 can cause the user to operate the image forming apparatus 101 without causing the user to recognize that an update is required in a state where the server apparatus 102 has notified the update manager 211 that the update program 104 is available.

After the processing of step S1305 is executed, it is assumed that a user with predetermined authority logs in and starts using the image forming apparatus 101. In this case, in step S1306, the status manager 1102 notifies the display manager 212 of user information indicating that the logged-in user has predetermined authority. In this case, the display manager 212 displays the update icon 701 on the first screen 601.

When the operator 203 has received an operation of selecting the update icon 811 in a state where the display manager 212 is displaying the second screen 801 on the display 204, the display manager 212 displays the update selection screen 901 (see FIG. 8) on the display 204.

When the update manager 211 determines that the operator 203 has received an update operation to execute update processing for updating the firmware program 103 (step S1307), the update manager 211 executes processing of requesting the update program 104 from the server apparatus 102 in step S1308. The processing of step S1309 to step S1311 is similar to the processing of step S409 to step S411 illustrated in FIG. 4, and thus a detailed description thereof will be omitted.

When only users identified by the user identifier 1101 as having predetermined authority are permitted to perform an update operation, users identified by the user identifier 1101 as not having predetermined authority cannot perform an update operation. However, when the user identifier 1101 identifies a user as not having predetermined authority and the update icon 701 is displayed on the first screen 601, there is a concern that the user may misunderstand that it is necessary to perform an update operation. However, in the image forming apparatus 101 according to the present embodiment, when the user identifier 1101 identifies a user as not having predetermined authority and the first screen 601 is displayed on the display 204, update processing is not executed. For this reason, when the user identifier 1101 identifies a user as not having predetermined authority, the image forming apparatus 101 according to the present embodiment can prevent the user from misunderstanding that it is necessary to perform an update operation even when the server apparatus 102 has notified the update manager 211 that the update program 104 is available.

On the other hand, when the user identifier 1101 identifies a user as having predetermined authority, the image forming apparatus 101 according to the present embodiment displays the first screen 601 on the display 204 in a state where the server apparatus 102 has notified the update manager 211 that the update program 104 is available. Thereby, when the user identifier 1101 identifies a user as having predetermined authority, the image forming apparatus 101 according to the present embodiment can update the firmware program 103 through a user operation in a state where the server apparatus 102 has notified the update manager 211 that the update program 104 is available.

### Modification Example

As a modification example according to the present embodiment, the image forming apparatus may display an update icon on the first screen 601 when the user identifier 1101 identifies a user as not having predetermined authority and the number of times update processing is not executed exceeds a threshold value. The display manager 212 according to the present modification example displays the update icon 701 on the first screen 601 when the user identifier 1101 identifies a user as not having predetermined authority and the number of times update processing is not executed exceeds a threshold value. When the update manager 211 executes update confirmation processing at predetermined time intervals, the display manager 212 displays the update icon 701 on the first screen 601 when the user identifier 1101 identifies a user as not having predetermined authority and update processing is not executed for more than a predetermined time.

As described above, the image forming apparatus 101 according to the present modification example can cause a user to recognize that the firmware program 103 needs to be updated. For example, when a user identified by the user identifier 1101 as not having predetermined authority recognizes that the firmware program 103 needs to be updated, the image forming apparatus 101 can prompt a user identified by the user identifier 1101 as having predetermined authority to perform an update operation. Thus, the image forming apparatus 101 according to the present modification example can promote execution of update processing when the update processing has not been executed for consecutive times.

### Third Embodiment

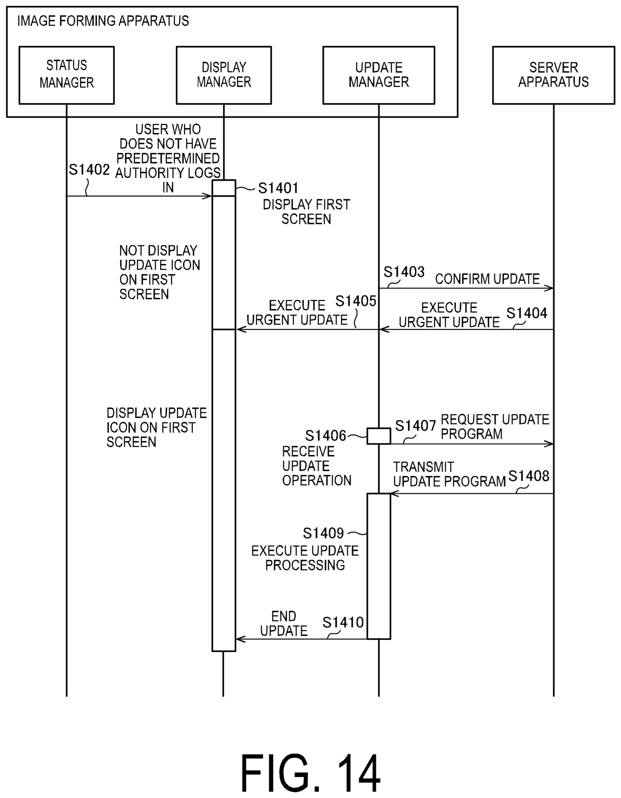

A third embodiment will be described with reference to FIG. 14. In the drawings, the same or equivalent elements are denoted by the same reference signs, and redundant descriptions are omitted. Configurations and processing having substantially the same functions as those in the other embodiments will be referred to by using the same reference characters, descriptions thereof will be omitted, and points differing from the other embodiments will be described.

An image forming apparatus 101 according to the present embodiment has a similar configuration to the image forming apparatus 101 illustrated in FIG. 12.

The display manager 212 according to the present embodiment displays the update icon 701 on the first screen 601 when the server apparatus 102 has notified the update manager 211 that the update program 104 is available, including emergency information. Specifically, when the server apparatus 102 has notified the update manager 211 that the update program 104 is available, including emergency information, and the update manager 211 identifies the emergency information, the display manager 212 displays the update icon 701 on the first screen 601. For example, the emergency information is information regarding security.

FIG. 14 is a sequence diagram illustrating an example of the operation of the information processing system 100 when the server apparatus 102 has given an instruction to urgently execute update processing. The processing of step S1401 to step S1403 is similar to the processing of step S1301 to step S1303 illustrated in FIG. 13, and thus a detailed description thereof will be omitted.

In step S1403, the update manager 211 executes update confirmation processing. It is assumed that the controller 303 determines that it is necessary to urgently execute update processing. For example, when a security risk of the image forming apparatus 101 is resolved by executing the update program 104, the controller 303 determines that it is necessary to urgently execute update processing.

When it is determined that an instruction to urgently execute update processing is given, the controller 303, in step S1404, causes the server apparatus to notify the update manager 211 that the update program 104 is available, including emergency information. In step S1405, when the update manager 211 identifies the emergency information, the update manager 211 notifies the display manager 212 that the emergency information has been received. The display manager 212 then displays the update icon 701 on the first screen 601. The processing of step S1406 to step S1410 is similar to the processing of step S407 to step S411 illustrated in FIG. 4, and thus a detailed description thereof will be omitted.

For example, even when the user identifier 1101 identifies a user as not having predetermined authority, when the server apparatus 102 has notified the update manager 211 that an update program is available, including emergency information, the display manager 212 displays the update icon 701 on the first screen 601. That is, when the server apparatus 102 has notified the update manager 211 that the update program 104 is available, including emergency information, the display manager 212 displays the update icon 701 on the first screen 601, regardless of whether the user identifier 1101 identifies a user as having predetermined authority.

When the display manager 212 does not display the update icon 701 on the first screen 601 when the user identifier 1101 identifies a user as not having predetermined authority, the image forming apparatus 101 cannot cause the user to recognize that the firmware program 103 needs to be updated urgently until it is used by a user identified by the user identifier 1101 as having predetermined authority. However, when the firmware program 103 needs to be updated urgently, it is desirable for a user identified by the user identifier 1101 as having predetermined authority to promptly perform an update operation. When an update is required urgently even when the user identifier 1101 identifies a user as not having predetermined authority, the display manager 212 displays the update icon 701 on the first screen 601, and thus the image forming apparatus 101 according to the present embodiment can prompt a user identified by the user identifier 1101 as having predetermined authority to perform an update operation.

For example, when the server apparatus 102 has notified the update manager 211 that the update program 104 is available, including emergency information, even when automatic update information indicates that an automatic update mode is enabled, the display manager 212 displays the update icon 701 on the first screen 601. Thereby, the image forming apparatus 101 according to the present embodiment can prompt a user identified by the user identifier 1101 as having predetermined authority to promptly perform an update operation even when update processing is executed automatically.

As described above, the image forming apparatus 101 according to the present embodiment can contribute to promptly updating the firmware program 103 when the firmware program 103 needs to be updated urgently.

Each of the processing operations executed in the embodiments described above is not limited to the processing aspect exemplified in each of the embodiments. The functional blocks described above may be each achieved by using a logic circuit (hardware) formed in an integrated circuit or the like, or by using software using a CPU. Each processing operation described in the embodiments described above may be executed by a plurality of computers. For example, some of the processing operations executed in the functional blocks of the image forming apparatus 101 and the processing operations executed in the functional blocks of the server apparatus 102 may be executed on another computer, or all of the processing operations may be shared and executed by a plurality of computers.

The disclosure is not limited to the embodiments described above, and may be replaced with a configuration that is substantially the same as the configuration illustrated in the embodiments described above, a configuration that achieves the same operations and effects, or a configuration that can achieve the same object. As for the disclosure, an embodiment obtained by appropriately combining technical means disclosed in the different embodiments is also included in the technical scope of the disclosure. Furthermore, by combining technical means disclosed in the individual embodiments, it is possible to form a new technical feature.

## Claims

1. An image forming apparatus (101) comprising:
a display (204) that displays a first screen and a second screen to which a transition is able to be made from the first screen;
a communicator (201) that communicates with a server apparatus;
an update manager (211) that executes update processing to update a firmware program; and
a display manager (212) that does not display an update icon related to the update processing on the first screen in a first state where the server apparatus (102) has not notified the update manager (211) that an update program for updating the firmware program is available, and that displays the update icon on at least one of the first screen and the second screen in a second state where the server apparatus (102) has notified the update manager (211) that the update program is available.

2. The image forming apparatus (101) according to claim 1, wherein the display manager (212) displays the update icon on the second screen in the first state.

3. The image forming apparatus (101) according to claim 1 or 2, further comprising a status manager (1102) that manages whether an automatic update mode for performing an automatic update is enabled, wherein
the update manager (211) executes the update processing in the second state when the automatic update mode is enabled, and
the display manager (212) does not display the update icon on the first screen when the automatic update mode is enabled in the second state, and displays the update icon on the first screen when the automatic update mode is not enabled in the second state.

4. The image forming apparatus (101) according to claim 1 or 2, further comprising a user identifier (1101) that identifies a user who has logged in to the image forming apparatus,
wherein the display manager (212) does not display the update icon on the first screen and the second screen in the first state and the second state when the user identifier (1101) identifies the logged-in user as not having predetermined authority.

5. The image forming apparatus (101) according to claim 4, wherein the display manager (212) displays the update icon on the first screen in the second state when the user identifier (1101) identifies the logged-in user as having the predetermined authority.

6. The image forming apparatus (101) according to claim 4, wherein the display manager (212) displays the update icon on the first screen when the user identifier (1101) identifies the logged-in user as not having the predetermined authority and the number of times the update processing is not executed exceeds a threshold value.

7. The image forming apparatus (101) according to claim 1 or 2, wherein the display manager (212) displays the update icon on the first screen when the server apparatus (102) notifies the update manager (211) that the update program is available, including emergency information.

8. The image forming apparatus (101) according to claim 1 or 2, wherein the display manager (212) does not display the update icon on the second screen when the update icon is displayed on the first screen.
